# EUROPEAN PATENT APPLICATION

(11) **EP 1 657 216 A1**
(43) Date of publication of application: **17.05.2006**
(21) Application number: 05256969.6
(22) Date of filing: 11.11.2005
(51) Int. Cl.: C01B 3/00

(54) **Tri-atomic hydrogen production, stabilisation and concentration**

(30) Priority: 15.11.2004 US 988655; 17.03.2005 US 82558
(71) Applicant: UNITED TECHNOLOGIES CORPORATION, Hartford Connecticut 06101 (US)
(72) Inventor: Humphrey, John M., Los Gatos, CA 95033 (US); Britt, Edward J., Cupertino, CA 95014 (US); Lowther, Scott E., Thatcher, UT 84337 (US); Weyland, Herman H., Morgan Hill, CA 95037 (US)
(74) Representative: Leckey, David Herbert

(57) **Abstract**

A system for producing, stabilizing, and concentrating tri-atomic hydrogen includes a source (12) of liquid hydrogen in the form of para-hydrogen, a piping system through which the liquid hydrogen flows, an injection point for combining the liquid hydrogen in the form of para-hydrogen with third hydrogen atoms (27) all with the same proton spin to form H₃ all with the same net magnetic orientation, and a continuous magnetic field for maintaining the magnetic orientation. The system further has a storage tank (34) for storing concentrated liquid H₃ molecules for use as a propellant.

## Description

### BACKGROUND OF THE INVENTION

### (1) Field of the Invention

The present invention relates to a system and a process for producing, stabilizing and concentrating tri-atomic hydrogen for high specific impulse rocket and air-breathing propulsion systems.

### (2) Prior Art

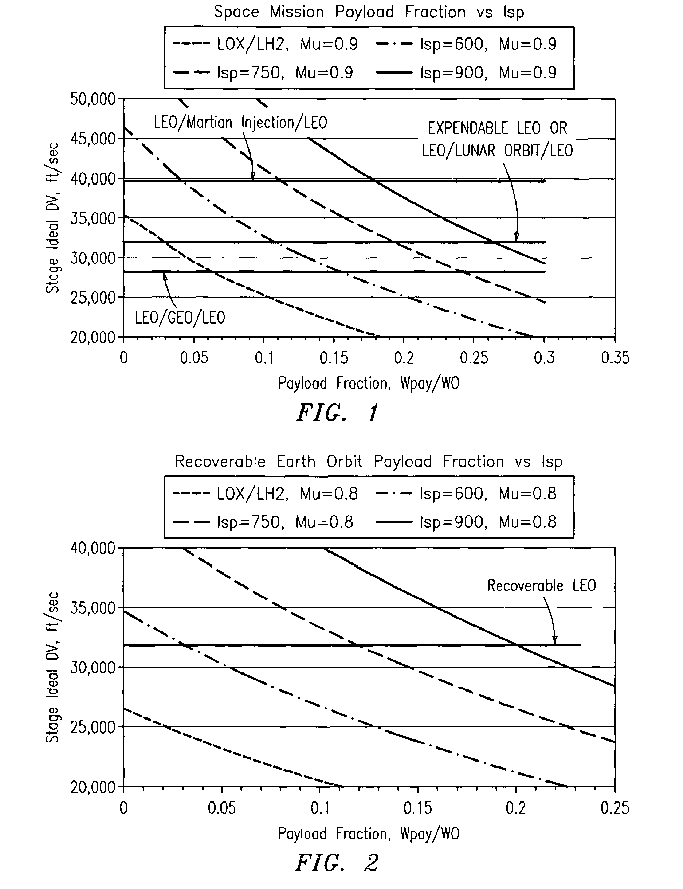

The economical exploration of space requires a substantial increase in specific impulse because the single stage missions that are key to the economic exploration of space lie beyond the capabilities of LOX/LH2 propulsion systems. The relationship between achievable payload fraction and required ideal delta V are presented in FIGS. 1 and 2 for a range of specific impulse values and are compared to the requirement for several important missions. FIG. 1 uses a structure fraction ((weight of non-payload structure and residual propellant weight)/weight of useful propellant) of 0.1 which is considered achievable for the missions listed and FIG. 2 use a structure fraction of 0.2 which is considered to be more realistic for the recoverable single stage Earth to Low Earth Orbit (LEO) mission.

For the mission parameters used in the study, single stage rockets using LOX/LH2 with a specific impulse of 460 seconds and a structure fraction of 0.1 achieve about a 6% payload fraction for geosynchronous satellite placement and recovery and about a 3% payload fraction for either an expendable LEO or a recoverable LEO to lunar orbit shuttle. Such LOX/LH2 rockets are unable to achieve any useful payload for a recoverable trans-Martian injection mission. However increasing the Specific Impulse from 460 seconds to 600 seconds increases the payload fractions for the above missions from 6%/3%/0% to 15%/10%/3% respectively and increasing the Specific Impulse to 900 seconds increases the payload fractions to a very respectable 30%/26%/18%. As shown in FIG. 2, for the recoverable single stage to orbit mission that is fundamental to all deeper space missions, LOX/LH2 falls far short of achieving a useful payload. However specific impulse values of from 750 seconds to 900 seconds could achieve payload fractions of between 12% and 20%.

Atomic hydrogen has for many years been an illusive goal of rocket propellant chemists. Atomic hydrogen has a theoretical specific impulse of over 2000 seconds, but the challenges of atomic hydrogen production and storage have yet to be overcome. Tri-atomic hydrogen offers a potential approach to achieving a significant fraction of the performance improvement advantages of atomic hydrogen. Depending on the binding energy of the third hydrogen atom, the energy release of tri-atomic hydrogen may be at best 1/3 of the energy release of atomic hydrogen. However, with specific impulse proportional to the square root of T/M (propellant gas stagnation temperature/molecular weight), tri-atomic hydrogen should have a specific impulse potential of around 1000 seconds.

The economical exploration of space requires the invention and commercialization of high thrust propulsion systems with a specific impulse of at least 600 seconds and more desirably of 750 seconds or above. Tri-atomic hydrogen offers a potential specific impulse in this range and may provide a quantum leap in mankind's exploration of space.

### SUMMARY OF THE INVENTION

Accordingly, it is an object of the present invention to provide a system for producing, stabilizing, and concentrating tri-atomic hydrogen.

It is a further object of the present invention to provide a process for producing, stabilizing, and concentrating tri-atomic hydrogen.

The foregoing objects are attained by the system and process of the present invention.

In accordance with the present invention, a system for producing, stabilizing, and concentrating tri-atomic hydrogen broadly comprises a source of liquid hydrogen in the form of para-hydrogen (which has oppositely directed proton spins), means for combining the para-hydrogen with third hydrogen atoms, such third atoms all having the same proton spin, to form H₃ all with the same net magnetic orientation, and means for maintaining the magnetic orientation with a continuous magnetic field.

Further, in accordance with the present invention, a process for producing, stabilizing, and concentrating tri-atomic hydrogen broadly comprises the steps of providing a source of liquid hydrogen in the form of para-hydrogen (which has oppositely directed proton spins), combining the para-hydrogen with third hydrogen atoms, such third atoms all having the same proton spin, to form H₃ all with the same net magnetic orientation, and maintaining the magnetic orientation with a continuous magnetic field.

Other details of the in-situ tri-atomic hydrogen production, stabilization, and concentration system and process, as well as other objects and advantages attendant thereto, are set forth in the following detailed description and the accompanying drawings wherein like reference numbers depict like elements.

### BRIEF DESCRIPTION OF THE DRAWINGS

FIG. 1 is a graph showing Delta V vs. Payload Fraction and Isp for a Structure Fraction of 0.1;
FIG. 2 is a graph showing Delta V vs. Payload Fraction and Isp for a Structure Fraction of 0.2; and
FIG. 3 is a schematic representation of a system for producing, stabilizing, and concentrating tri-atomic hydrogen.

### DETAILED DESCRIPTION OF THE PREFERRED EMBODIMENT(S)

The present invention relates to a system and a process for producing, stabilizing and concentrating tri-atomic hydrogen for high specific impulse rocket and air-breathing propulsion systems and to a propellant formed by said system and process.

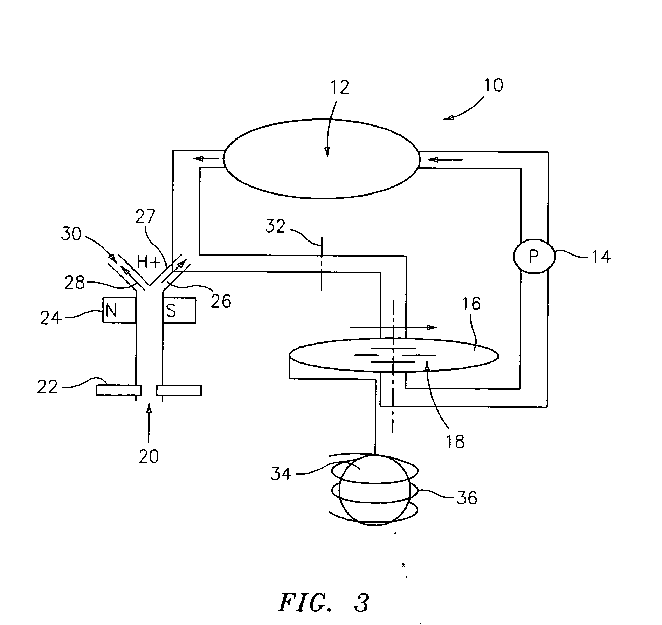

FIG. 3 represents a system 10 for producing, stabilizing, and concentrating tri-atomic hydrogen. The system 10 includes a tank 12 of liquid hydrogen that has been held in liquid form long enough for the hydrogen molecules to transform to para-hydrogen where the spins of the protons in the two hydrogen atoms are in opposite directions. A pump 14 circulates the liquid hydrogen through a piping or flow system to and through a spinning tank 16. While vortex flow separation is more common, the present invention utilizes a centrifugal separation approach to minimize flow disruption relative to the magnetic field during the separation process. The radial acceleration equals the radius times (the rotational speed in radians/sec)².

The spinning tank 16 preferably has a plurality of baffles 18 to extend the transit time of the liquid hydrogen through the spinning tank 16 and, more importantly, to force the flowing liquid hydrogen well off centerline in its passage through the spinning tank 16. The design of the spinning tank 16, e.g. size and rotation rate, depends on the density difference between the H₂ and H₃. The spinning tank 16 provides centrifugal separation of the liquid tri-atomic and diatomic hydrogen as a result of a significant density difference between the liquids. Since tri-atomic hydrogen is more dense, it can be extracted at the periphery. Any suitable means known in the art may be used to spin the tank 16.

A flow 20 of gaseous hydrogen passes through an electric arc 22 inside an RF field dissociator, such as an RF oscillator, before entering a non-homogeneous magnetic flow field 24. Gas dissociation and ionization using an RF oscillator is sometimes preferred as this approach does not introduce material from any electrodes. However, in some instances, the oscillating RF field may interfere with the flow separation magnetic field. In these instances, a simple electric discharge may be used as a preferred approach. The voltage which is used should be high enough to both ionize and dissociate the hydrogen so that the magnetic field can select on proton spin.

The electric arc 22 both dissociates hydrogen molecules and ionizes the individual hydrogen atoms. A non-homogeneous magnetic flow field 24 separates the ionized and dissociated hydrogen atoms by the spin of their protons.

A first hydrogen stream 26 of like spin protons is thus created and then injected into the stream of liquid hydrogen via passageway 27. A second hydrogen stream 28 of opposite spin protons is simply discharged through outlet 30. As shown in FIG. 3, the spin orientation of the protons may be maintained by a continuous magnetic field through the passageway 27 to the spinning tank 16. In a preferred embodiment of the present invention, the continuous magnetic field may be generated by a DC current through cryogenically cooled electrical coils around the liquid hydrogen piping or by an equivalent approach. The field generated by a DC current through a coil of wires around the pipe generates a continuous magnetic field to maintain the orientation of the tri-hydrogen ions. If desired, other approaches may be used.

The object of dispersing hydrogen ions into the stream of liquid hydrogen is to cool the hydrogen ions through collisions with hydrogen molecules and then encourage the hydrogen ions to associate with liquid hydrogen molecules to form H₃⁺. The natural repulsion of both the injected H⁺ ions and the newly formed H₃⁺ ions discourages interactions with similar ions during this cooldown process.

Downstream of the injection point (passageway 27), the stream of liquid hydrogen passes through a negatively charged grid 32. The negatively charged grid 32 is located far enough downstream of the H⁺ injection point (passageway 27) to allow the H₃⁺ ions to reach thermal equilibrium with the liquid H₂. The object of the negatively charged grid 32 is to convert the H₃⁺ ions to liquid H₃ molecules which are stable at the cryogenic temperature of the flow.

A key feature of the present invention is the use of para-hydrogen combined with third hydrogen atoms all with the same proton spin to form liquid H₃ molecules all with the same net magnetic orientation, which orientation is maintained with a continuous magnetic field. Since the liquid H₃ molecules thus created all consist of two hydrogen atoms with opposite spin (i.e. para-hydrogen) and one atom of hydrogen all with the same spin orientation maintained by the magnetic field, the resulting liquid H₃ molecules should be magnetically repulsive and therefore more stable than a mixture of H₃ molecules with randomly oriented magnetic moments. The process of the present invention is used to produce H₃ molecules which exhibit long term stability at liquid hydrogen temperatures for use as a rocket mono-propellant or as an exothermic fuel in either rocket or air breathing propulsion applications.

The spinning tank 16 concentrates the liquid H₃ from the liquid H₂ based on the density difference of the two liquids. This is because the spinning tank 16 acts as a kind of centrifuge. The concentrated liquid H₃ is extracted from the periphery of the tank 16 by gradually bleeding it off and is stored in a storage tank 34 for use as a propellant. The storage tank 34 also preferably has a continuous magnetic field about it. The continuous magnetic field may be generated by wrapping coils of wire 36 around the tank 34 and maintaining a DC current through the wires 36 to align the molecules in the direction of their third atom spin to maintain long term H₃ stability. Reducing the storage temperature further improves the long term H₃ stability.

Liquid hydrogen (H₂) boils at about 20 degrees Kelvin. Keeping the temperature of the H₃ close to 0 degrees Kelvin is desirable to increase its half life, both directly and in support of the common third proton spin construction and magnetic field maintenance of the H₃ molecule. The same refrigeration system that produces the liquid hydrogen may be used to maintain the temperature that is needed.

Thermal decomposition is the baseline approach for using liquid H₃ as a propellant. When used as a rocket monopropellant, the liquid H₃ may be injected into a heated pressurized chamber where the decomposition of H₃ molecules and the reformation of H₂ molecules would create a hot stream of low molecular weight exhaust products. When used in high performance air breathing applications, such as ramjets and scramjets, the decomposition of H₃ molecules to H₂ + H and the rapid combustion of the heated H atoms with air facilitates both higher specific impulse and sustained combustion under conditions that are presently difficult to achieve.

The present invention provides a process and a system to respond to the needs for a higher specific impulse propellant for space propulsion and high performance air breathing propulsion applications through the production, concentration, storage and eventual propulsive decomposition of tri-atomic hydrogen.

## Claims

1. A system for producing, stabilizing, and concentrating tri-atomic hydrogen comprising:
a source (12) of liquid hydrogen in the form of para-hydrogen;
means for combining said para-hydrogen with third hydrogen atoms each having the same proton spin to form liquid H₃ molecules all with the same net magnetic orientation; and
means for maintaining said magnetic orientation in said liquid H₃ molecules with a continuous magnetic field.

2. A system according to claim 1, wherein said para-hydrogen source comprises a tank (12) containing liquid hydrogen that has been held in liquid form long enough for hydrogen molecules to transform to said para-hydrogen form, a piping system through which a stream of said liquid hydrogen flows and a pump (14) for circulating said liquid hydrogen stream through said piping system.

3. A system according to claim 1 or 2, further comprising means (16) for concentrating said liquid H₃ molecules.

4. A system according to claim 3, wherein said concentrating means comprises a spinning tank (16) and, wherein said spinning tank has means (18) for extending transit time of said liquid hydrogen through said spinning tank (16) and for forcing the liquid hydrogen off centerline in its passage through the spinning tank.

5. A system according to claim 4, wherein said transit time extending and forcing means comprises a plurality of flow baffles (18).

6. A system according to any preceding claim, wherein said combining means comprises means for providing a flow (20) of gaseous hydrogen, means (22) for dissociating hydrogen molecules and ionizing individual hydrogen atoms in said gaseous hydrogen, and means (24) for separating the ionized hydrogen atoms by the spin of their protons.

7. A system according to claim 6, wherein said dissociating means (22) comprises an electric arc and said separating means (24) comprises means for creating a magnetic flow field around said gaseous hydrogen flow.

8. A system according to claim 6 or 7, wherein said combining means further comprises means (27) for injecting a first stream (26) of like spin protons into said liquid hydrogen stream and means (30) for discharging a second stream (28) of opposite spin protons.

9. A system according to claim 8, further comprising means (32) for converting H₃ ions to H₃ molecules positioned downstream of said injecting means (27).

10. A system according to claim 9, wherein said converting means (32) comprises a negatively charged grid.

11. A system according to any preceding claim, further comprising a storage tank (34) for storing concentrated liquid H₃ molecules and means (36) for creating a magnetic field for aligning the molecules in the direction of their third atom spin.

12. A system according to any preceding claim, wherein said stream of liquid hydrogen flows through a piping system and said magnetic orientation maintaining means comprises means for generating a magnetic field around a portion of said piping system.

13. A process for producing, stabilizing, and concentrating tri-atomic hydrogen comprising the steps of:
providing a source (12) of liquid hydrogen in the form of para-hydrogen;
combining said para-hydrogen with third hydrogen atoms all with the same proton spin to form liquid H₃ molecules all with the same net magnetic orientation; and
maintaining said magnetic orientation with a continuous magnetic field.

14. A process according to claim 13, further comprising circulating a stream of said liquid hydrogen through a piping system to a spinning tank (16) and concentrating liquid H₃ molecules in said spinning tank (16).

15. A process according to claim 14, wherein said concentrating step comprises passing said stream of liquid hydrogen through means (18) for extending the transit time of the liquid hydrogen stream through the spinning tank and for forcing the liquid hydrogen stream off centerline as said stream of liquid hydrogen passes through said spinning tank (16).

16. A process according to claim 13, 14 or 15, wherein said combining step comprises providing a flow (20) of gaseous hydrogen, passing said hydrogen through an electric arc (22) to dissociate hydrogen molecules and ionizing individual hydrogen atoms, and magnetically separating said ionized hydrogen atoms by the spin of their protons.

17. A process according to claim 16, wherein said combining step further comprises injecting a first stream (26) of like spin protons into said liquid hydrogen stream and discharging a second stream (28) of opposite spin protons.

18. A process according to any of claims 13 to 17, wherein said maintaining step comprises creating a magnetic field around a portion of the piping through which said stream of liquid hydrogen flows.

19. A process according to any of claims 13 to 18, further comprising passing said combined liquid hydrogen stream and said third hydrogen atoms through a negatively charged grid (32) to convert H₃⁺ ions to said liquid H₃ molecules and storing concentrated liquid H₃ molecules in a storage tank (34).

20. A process according to claim 19, further comprising applying a magnetic field to said storage tank (34) to align the liquid H₃ molecules in a direction of their third atom spin and reducing storage temperature in said storage tank (34).

21. A propellant comprising liquid H₃ molecules having said molecules aligned in a direction of a third atom spin.

22. A process for forming a propellant comprising:
providing a source (12) of liquid hydrogen in the form of para-hydrogen;
passing a stream of said liquid hydrogen through a flow system;
injecting hydrogen ions having like spin protons into the stream of said liquid hydrogen;
maintaining the spin orientation of said protons;
converting H₃⁺ ions in said liquid hydrogen to liquid H₃ molecules which are stable at cryogenic temperature;
concentrating the liquid H₃ molecules from liquid H₂; and
extracting the liquid H₃ molecules and storing the liquid H₃ molecules for use as a propellant.

23. A process according to claim 22, further comprising forming said hydrogen ions having like spin protons by providing a flow of gaseous hydrogen (20), passing said flow through an electric arc (22) to dissociate hydrogen molecules and ionize individual hydrogen atoms, and separating the ionized hydrogen atoms by proton spin.

24. A process according to claim 23, wherein said separating step comprises subjecting said ionized hydrogen atoms to a magnetic field (24).

25. A process according to claim 24, further comprising discharging a stream (28) of opposite spin protons through an outlet (30).

26. A process according to any of claims 22 to 25, wherein said converting step comprises passing said liquid hydrogen stream through a negatively charged grid (32) and wherein said concentrating step comprises passing the liquid hydrogen stream into a spinning tank (16) having a plurality of baffles (18) for extending the transit time of the liquid hydrogen through the spinning tank (16) and to force the flowing liquid hydrogen off centerline as said liquid hydrogen passes through said spinning tank (16).
